# EUROPEAN PATENT APPLICATION

(11) **EP 0 585 950 A2**
(43) Date of publication of application: **09.03.1994**
(21) Application number: 93114174.1
(22) Date of filing: 03.09.1993
(51) Int. Cl.: G01S 5/14, G01S 5/00, G01C 21/20

(54) **Communication system for automotive navigation system**

(30) Priority: 04.09.1992 JP 263099/92
(71) Applicant: PIONEER ELECTRONIC CORPORATION, Meguro-ku Tokyo (JP)
(72) Inventor: Hatano, Ichirou, c/o Pioneer Electronic Corp., Meguro-ku, Tokyo (JP); Shimizu, Toshihiko, c/o Pioneer Electronic Corp., Meguro-ku, Tokyo (JP); Watanabe, Shuji, c/o Pioneer Electronic Corp., Meguro-ku, Tokyo (JP); Kamioka, Yoshiyuki, c/o Pioneer Electronic Corp., Meguro-ku, Tokyo (JP)
(74) Representative: MEISSNER, BOLTE & PARTNER

(57) **Abstract**

A system for communication between an automotive navigation system (10) mounted on a motor vehicle and a host computer (20) provided in an installation has an information transmitting card (16) having a memory. A reader/writer (14) is provided in the automotive navigation system (10) for reading data stored in the information transmitting card (16) and for writing read out data in a memory (15) of the navigation system (10). The host computer (20) has a reader/writer (21) and a data memory (25) for storing information data. The reader/writer (21) of the host computer (20) derives data stored in the data memory (25) and writes the derived data in the information transmitting card (16) in response to instructions from input means (28).

## Description

### BACKGROUND OF THE INVENTION

The present invention relates to a communication system for transmitting information to and from automotive navigation systems.

In an automotive navigation system, the present location of an automobile on which the system is mounted is detected by a location detecting means such as a Global Positioning System (GPS), and then indicated on a map shown on a display. Locations of the automobile are detected at regular intervals of time or distance, and stored in a ring buffer memory as a route which the automobile has taken to the present location. When the memory has become full, new data are written over the old data, so that only the latest data are stored in the memory.

The stored route data may be referred at the next time for the same destination. Hence, not only the general direction of the destination, but also the specific route thereto is easily perceived without relying on the driver's memory, which may often be deceptive.

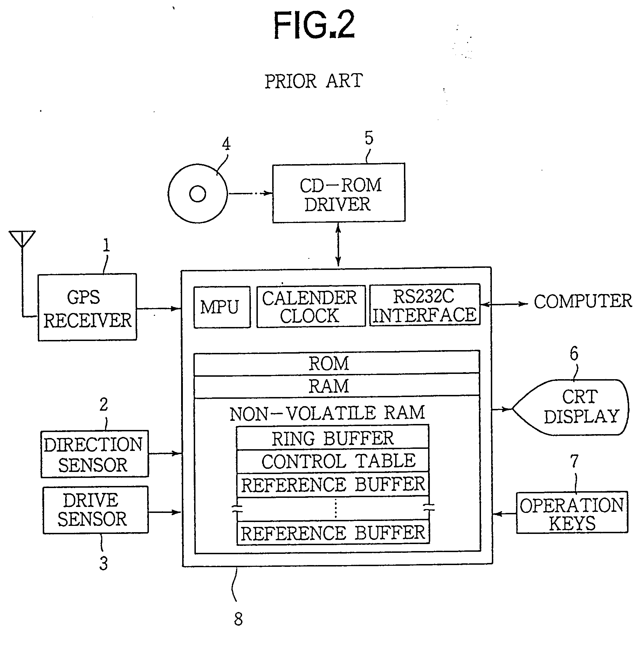

More particularly, referring to Fig. 2, a conventional navigation system mounted on an automobile has a GPS receiver 1 for receiving waves from a satellite for detecting the location of the automobile, a direction sensor 2 for detecting the heading direction of the automobile, and a drive sensor 3 for detecting the vehicle speed and the travelling distance thereof. The output signals of the receiver 1 and sensors 2 and 3 are applied to a control unit 8 having a microprocessor unit (MPU) and storing means including ROM, RAM and a non-volatile RAM. The control unit 8 can be connected to an external computer such as a laptop computer through an interface.

When a commercially sold CD-ROM 4 is set into such a system, and operation keys 7 are operated, a data base of a map stored in the CD-ROM 4 is read out by a CD-ROM driver 5 and shown on a CRT display 6. The latitude and longitude of the present location of the automobile are calculated in accordance with the outputs of the direction sensor 2 and the drive sensor 3, thereby further showing the course of the automobile on the map.

By the operation of the operation keys 7, the route data are stored for future reference in one of a plurality of reference buffers provided in the non-volatile RAM. When the automobile is driven for the same destination, the route data are read out and shown on the display for reference, so that the driver can quickly learn the route. The route data headed for another destination which is less frequently used are stored in the external computer.

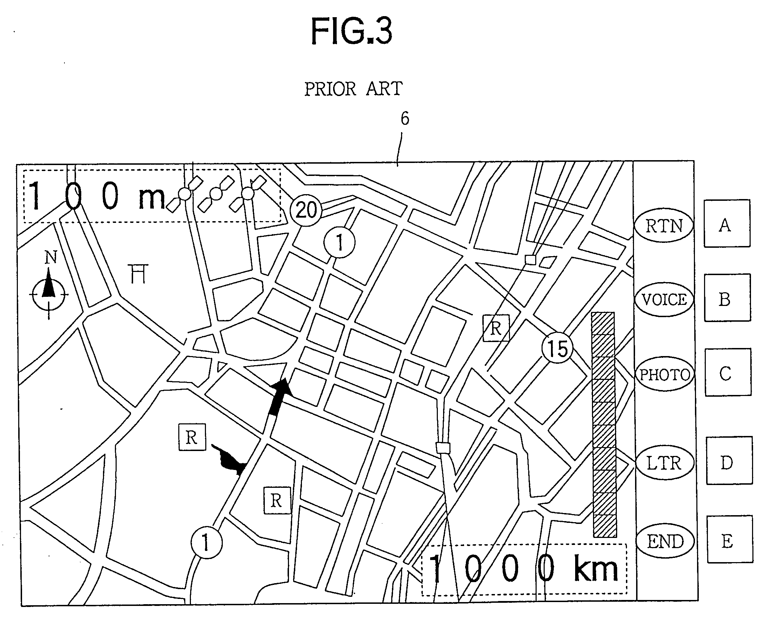

Also, there has been proposed an automotive navigation system where restaurants, gas stations and other facilities in the vicinity are shown on the map. Referring to Fig. 3, the CRT display 6 of such a system is provided with various operation keys A to E for designating various operational modes and functions of the navigation system. The modes and functions designated by the keys are shown on indicators adjacent the keys by characters and symbols. For example, in order to search a nearby restaurant, one of the keys is depressed. The display shows a map where the locations of restaurants are marked R as shown in Fig. 3. The user selects one of the mark by depressing a key several times, each operation resulting in the index on the map jumping from one mark to another. By operating another key, audio-visual information regarding the selected restaurant such as the name, photograph, recommended dishes and price can be obtained. Hence, the driver can easily obtain various useful information while driving the automobile.

The driver can further store new information which is not stored in the CD-ROM in the non-volatile RAM or in storing means of an external computer. However, the information is not accessible by other users of the navigation system. In addition, the CD-ROM stores information which is useless to some users.

### SUMMARY OF THE INVENTION

An object of the present invention is to provide a communication system for automotive navigation systems wherein information can be shared by a plurality of users.

According to the present invention, there is provided a system for communication between an automotive navigation system mounted on a motor vehicle and a host computer provided in an installation, the automotive navigation system having a memory, and a first display.

The system comprises an information transmitting card having memory means, a first reader/writer provided in the automotive navigation system for reading data stored in the information transmitting card and for writing read out data in the memory, the host computer including a CPU, a second reader/writer, storing means for storing data, a second display, and input means, the host computer being arranged such that the second reader/writer derives data stored in the storing means and writes the derived data in the information transmitting card in response to instructions from the input means.

The second reader/writer is arranged to read data stored in the information transmitting card and writes the read out data into the storing means.

Other objects and features of this invention will become understood from the following description with reference to the accompanying drawings.

### BRIEF DESCRIPTION OF DRAWINGS

- Fig. 1: is a block diagram of a communication system according to the present invention;
- Fig. 2: is a block diagram showing a conventional navigation system; and
- Fig. 3: is an illustration of a conventional display showing a map.

### DETAILED DESCRIPTION OF A PREFERRED EMBODIMENT

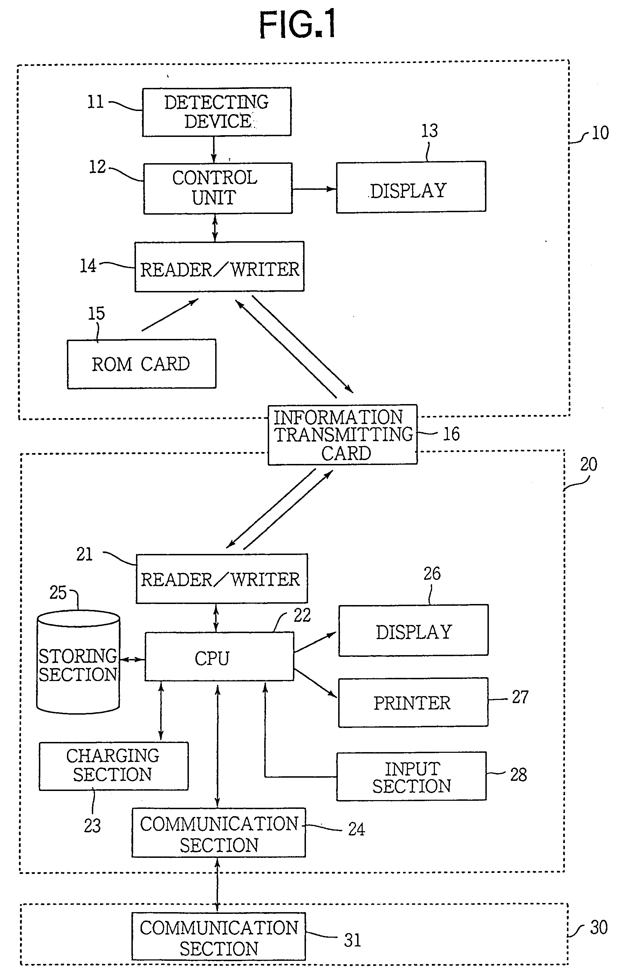

Referring to Fig. 1, a communication system according to the present invention comprises a host computer 20 provided at a community-based place of business, such as a local car dealer, and automotive navigation systems 10, each mounted on an automobile. The navigation system 10 has a detecting device 11, which, like a conventional system, comprises a GPS receiver, a direction sensor and a drive sensor. The output signal of the detecting device 11 is applied to a control unit 12 which determines the present position of the automobile. A ROM card 15 which stores map data for navigation, navigation programs and service information is set in the navigation system 10 so that the data therein are read by a reader/writer 14 and shown on a display 13 through the control unit 12. Data which are not stored in the ROM card 15 can be stored in an information transmitting card 16 having the ROM and RAM which is possessed by the user.

The host computer 20 has a CPU 22 and an input section 28 for operating the CPU 22. The CPU 22 is connected to a storing section 25 which stores various data which are not stored in the commercially sold ROM card 15, such as, maps, shopping, restaurant, entertainment and parking guides of the area where the host computer 20 is situated.

The CPU 22 is further connected to a display 26 for indicating the information retrieved from the storing section 25 and a printer 27 for printing out the information.

The host computer 20 further has a reader/writer 21 into which the information transmitting card 16 of an individual user is inserted. Thus, the information in the storing section 25 can be written on the card 16 and the information written on the card 16 can be stored in the storing section 25.

A charging section 23 is provided in the host computer 20 so that the user may be charged as appropriate when deriving from and registering information in the system. The host computer 20 is communicated with another host computer 30 provided in another community through communication sections 24 and 31 by way of radio or cable transmission.

The operation of the present invention for deriving information from the host computer 20 and transferring the information to the navigation system 10 is described hereinafter. The user takes the information transmitting card 16 from the navigation system 10 of his automobile and sets it into the reader/writer 21 of the host computer 20. The user then operates the input section 28 in accordance with a guide shown on the display 26 to obtain area information of his choice. The information is derived from the storing section 25 through the CPU 22 and further written on the card 16 by the reader/writer 21. If the information is charged, the user deposits an appropriate amount in the charging section 23. When the recorded card 16 is set into the reader/writer 14 of the navigation system 10, the new information is shown on the display 13.

The information may further be shown on the display 26 and printed out by the printer 27, so that the information may be shared with users who do not own an navigation system.

When the user wishes to obtain route information, for example, an optimum route from his home to a certain destination, instruction data such as the location of his home and the destination are fed to the CPU 22 of the host computer 20 through the input section 28. The route information is derived from the storing section 25 and written on the information transmitting card 16. Thus, when the card is inserted in the reader/writer 14 of the navigation system 10, the optimum route is shown on the display 13, thereby enabling a user to operate the navigation system by using the detecting device 11.

The host computer 20 may further be used as a community information base. More particularly, the host computer 20 may show on the display 26, classified ads, for example, buy and sell and employment advertisements, bargain information, and tips on roadside attractions and by-passes. Fee may be collected from advertisers through the charging section 23.

The host computer 20 may communicate with the host computer system 30 located in another area through the respective communication sections 24 and 31. Thus, the user may derive information on areas which are not included in the local host computer 20 nor in the purchased ROM card 15. Thus information on areas which the user intends to visit is easily available.

In the case where the host computer 20 is provided by a car dealer, an ID code is assigned to each client, whereby appropriate information may be sent to the clients.

The display 26 of the host computer 20 may be enlarged so as to render it to function as a sign-board, thereby enhancing publicity.

The communication between the host computer 20 and the navigation system 10 may be performed through radio or cable transmission using predetermined codes.

From the foregoing it will be understood that the present invention enables the car drivers to obtain local and updated information which cannot be collected by the driver alone, and which are not provided by the commercially sold ROM cards. Furthermore, the driver is able to select only the necessary information, such as navigation maps which he does not possess, and route information.

To the operator of the host computer, the present invention is advantageous in that information stored therein are increased by users. Moreover, payments may be made to the operator every time the information is read or written. Hence the network provides a prospective medium from the point of information industry.

While the presently preferred embodiment of the present invention has been shown and described, it is to be understood that this disclosure is for the purpose of illustration and that various changes and modifications may be made without departing from the scope of the invention.

## Claims

1. A system for communication between an automotive navigation system mounted on a motor vehicle and a host computer (20) provided in an installation, the automotive navigation system (10) having a memory (15), and a first display (13), comprising:
- an information transmitting card (16) having memory means;
- a first reader/writer (14) provided in the automotive navigation system (10) for reading data stored in the information transmitting card (16) and for writing read out data in the memory (15);
- the host computer (20) including a CPU (22), a second reader/writer (21), storing means (25) for storing data, a second display (26), and input means (28);
- the host computer (20) being arranged such that the second reader/writer (21) derives data stored in the storing means (25) and writes the derived data in the information transmitting card (16) in response to instructions from the input means (28).

2. The system according to claim 1,
wherein the second reader/writer (21) is arranged to read data stored in the information transmitting card (16) and writes the read out data in the storing means (25).

3. The system according to claim 1 or 2,
further comprising a printer (27) provided in the host computer (20) for printing data derived from the storing means (25).

4. The system according to any of claims 1 to 3,
wherein the host computer (20) comprises a communication section (24) for communication with another data base or host computer system (30).
